Europäisches Patentamt

European Patent Office

Office européen des brevets

(11) Publication number: **0 129 349**
**B1**

## EUROPEAN PATENT SPECIFICATION

(45) Date of publication of patent specification: **05.10.88**

(51) Int. Cl.⁴: **F 16 J 13/08**, F 16 J 13/10

(21) Application number: **84303515.5**

(22) Date of filing: **24.05.84**

(54) Closure, especially for a pressure vessel, and seal therefor.

(30) Priority: **14.06.83 GB 8316223**

(43) Date of publication of application:
**27.12.84 Bulletin 84/52**

(45) Publication of the grant of the patent:
**05.10.88 Bulletin 88/40**

(84) Designated Contracting States:
**BE DE FR GB IT**

(56) References cited:
**DE-C-1 023 742**
**DE-C-1 037 999**
**GB-A-1 594 935**

(73) Proprietor: **GENERAL DESCALING CO. LIMITED
Worksop Nottinghamshire S80 2PY (GB)**

(72) Inventor: **Platts, Douglas John
Bridge House 33, Sheffield Road
Creswell Nr. Worksop Nottinghamshire (GB)**

(74) Representative: **Votier, Sidney David et al
CARPMAELS & RANSFORD 43, Bloomsbury
Square
London WC1A 2RA (GB)**

Courier Press, Leamington Spa, England.

# Description

This invention relates to closures, especially for pipes and pressure vessels, and to seals for such closures.

In U.K. Patent Specification No: 1,508,998 there is disclosed a closure menber for a pipe or pressure vessel comprising a door adapted to fit an aperture in the body of the pipe or the pressure vessel, a plurality of blocks slidably mounted adjacent the periphery of the door and movable from a position at least substantially wholly within the said periphery to a position in which a part of each block protrudes beyond the periphery for engagement with the said body, the said parts of the blocks together forming a protrusion extending substantially entirely around the periphery of the door, and means for moving the blocks from the withdrawn to the protruding position.

The closure member of that Specification was particularly designed for relatively large apertures in pipes and pressure vessels which are subject to high pressures. The complexity of the construction of the closure member, however, prevents a similar design from being readily used in closures for small apertures. A closure for small apertures is described in U.K. Patent Specification 1,594,935, wherein the closure comprises a door adapted to fit into an aperture in the pipe or pressure vessel, an arcuate locking member disposed around the periphery of the door for locking the door to the pipe or pressure vessel, the ends of the locking member being movable towards and away from each other to cause radial contraction and expansion of the locking engagement with the pipe or pressure vessel, and a hinge assembly by means of which the door may be mounted on the pipe or pressure vessel, said hinge assembly comprising a main bracket adapted to be secured to the pipe or pressure vessel, a secondary bracket pivotally mounted on the main bracket and a support for the door mounted on the secondary bracket for movement about an axis parallel to the pivot axis of the secondary bracket.

The use of a single arcuate locking member, rather than a plurality of locking blocks, considerably simplifies the construction of the closure. However, the closure is still fairly expensive to manufacture, and it is an object of the present invention to provide a closure for a member to be closed, especially a pipe or pressure vessel, which is efficient in use, relatively cheap to manufacture and can be made in a variety of sizes for a variety of requirements.

In DE-C-1 023 742 there is described a closure which comprises a door adapted to fit into an aperture in a member to be closed, and an arcuate locking member disposed around the periphery of the door for locking the door to the said member, the ends of the locking member being movable towards and away from each other to cause radial contraction and expansion of the locking member, whereby the locking member may be brought out of and into locking engagement with the said member, and wherein the arcuate locking member, when in locking engagement with the said member is locked between surfaces of the said member and the door.

In accordance with the present invention, in a closure member of this type the surfaces of the member and the door between which the locking member is locked are at an acute angle relative to the plane of the door, and there is provided a segmental block which fits between the ends of the locking member when the locking member is expanded, said block being attached to a plate adapted, when the block is in position between the ends of the locking member, to overlie a bleed port in the door.

Where the closure is to be used in a circular aperture, the locking member will usually comprise a generally annular or C-shaped body. It will be appreciated that the radial width of the locking member must be sufficient to ensure adequate engagement of the locking member with both the door and the walls of the member in which the closure is fitted. Since the resistance to bending of the locking member will increase with the radial thickness of the member, the locking member is preferably shaped or constructed to accommodate the radial expansion and construction of the locking member. In a preferred embodiment, the locking member is in the form of a conical flat band, the section of which is rectangular. In another embodiment the locking member comprises an annular or C-shaped band on which are attached a number of locking plates or blocks which, when the band is expanded, come into locking engagement between the said surfaces of the member to be closed and the door.

The closure of the invention is particularly useful in conjunction with pipes and pressure vessels, and it is in this context that it will be particularly described herein.

It will be noted that because the bearing surfaces of the pipe or pressure vessel and the door, between which is engaged the locking member or locking attachments when in locking engagement, are at an acute angle relative to the plane of the door, when pressure is applied to the closure from within the pipe or pressure vessel the inclined bearing surface transmits part of the axial force to the radial direction, thus improving the engagement between the locking member or its attachments when present and the pipe or pressure vessel and inducing a more simple compressive stress in the locking member. The acute angle is preferably in the range 15-25°, and suitably the angle is 20°.

The size of the space between the ends of the locking member when the locking member is in its expanded condition is determined by the extent by which the locking member must be oontracted to disengage it or its attachments from the aperture of the pipe or pressure vessel. The radial contraction required of the locking member is not related directly to the diameter of the locking member itself. Thus, for any predetermined radial depth of engagement between the locking member and the walls of the pipe or pressure vessel, the same distance between the ends of the locking member and the same operating mechanism may be used for a wide range of sizes of closures.

The locking member is used in conjunction with a segmental block or link which is adapted to fit between the ends of the locking member when the locking member is expanded. In use, this block or link is inserted between the ends of the locking member after the locking member has been expanded so that, when locked, the closure is in engagement with the aperture in the pipe or pressure vessel around the whole of the periphery of the door.

In a preferred mode of construction the segmental block or link is cut from the original conical band which has been manufactured to conform to "expanded" size. This ensures that the separate segment precisely agrees with the dimensions and characteristics of the main part of the band, and can thus bear a due share of the total load.

The segmental block or link, when in position holding the ends of the locking member apart, also lies over and is attached to a bleed device. Before the block or link can be removed it is necessary to open the bleed device, and this acts as a security measure since bleeding of the pipe or pressure vessel must occur before the door can be unlocked.

Any suitable mechanism may be used for moving the ends of the locking member towards and away from each other, and examples include mechanical linkages and fluid cylinders. A preferred mechanical linkage comprises a horseshoeshaped spring link the ends of which are attached (one of them by means of an operating link) to the respective ends of the locking member, these being movable away from each other by means of a tommy bar engaging the operating link attached to one end of the spring link. In this way the operating mechanism for the locking member does not form a permanent attachment to the door.

The closure is preferably hingedly mounted on the pipe or pressure vessel, and in one form of hinged mounting a main bracket is secured to the pipe or pressure vessel, a secondary bracket is pivotally mounted on the main bracket and a support for the door is pivotally mounted on the second bracket for movement about an axis parallel to the pivot axis of the secondary bracket. The pivotal axis of the door support is suitably spaced from the pivot axis of the secondary bracket by a distance equal to between 1/3 and 2/3 of the radius of the door, and most suitably by approximately 1/2 of the radius of the door. Such a construction allows the closure to be withdrawn generally axially from the aperture before being pivoted to one side of the aperture.

Preferably the support for the door is releasably connected to the door so that the hinge assembly can be disconnected from the door and desirably also the pipe or pressure vessel for separate storage.

The closure of the invention preferably comprises also a seal which is located between two opposed faces on the door and the wall of the aperture of the pipe or pressure vessel respectively, and in a preferred embodiment the seal is an annular ring of resilient material having first and second flanges adapted to engage respective opposed faces of the door and aperture, the radially outer flange having greater flexibility than the radially inner flange. Suitably the seal is held captive within a groove around the periphery of the door, and engages with either a flat face or a concave toroidal groove formed in the inner of the aperture. The materials from which the seal is made will depend upon the pressures to which the seal is to be subjected. The seal will normally be made of an elastomeric material. Preferably the two flanges of the seal embrace between them a lumen or space so that, under pressure, the seal is deformed into engagement with the respective opposed faces of the aperture and the door.

When the surface of the fixed face in the aperture, against which the seal makes first contact, is concave, then by its recessed nature it is shielded from damage by impacts or abrasion from solid items of equipment which may routinely be passed through the aperture.

An embodiment of the present invention will now be described with reference to the accompanying drawings wherein:

Figure 1 shows an aperture for a pipe or pressure vessel, with a hinged door in the open position;

Figure 2 shows the door in the closed and locked position;

Figure 3 is an enlarged cross-section on the line 3-3 of Figure 2 showing the door, aperture and hinge, with the door in the locked position;

Figure 4 is a vertical-section of the locking segment held in position by attachment to a bleed bolt, with the spring linkage omitted for clarity;

Figure 5 is a close-up of the ends of the arcuate locking member, showing the horseshoe-shaped spring linkage in an unlocked position;

Figure 6 shows an operating bar operating to expand the locking member; and

Figure 7 is a view similar to Figure 6, but showing the operating bar in the fully locked position.

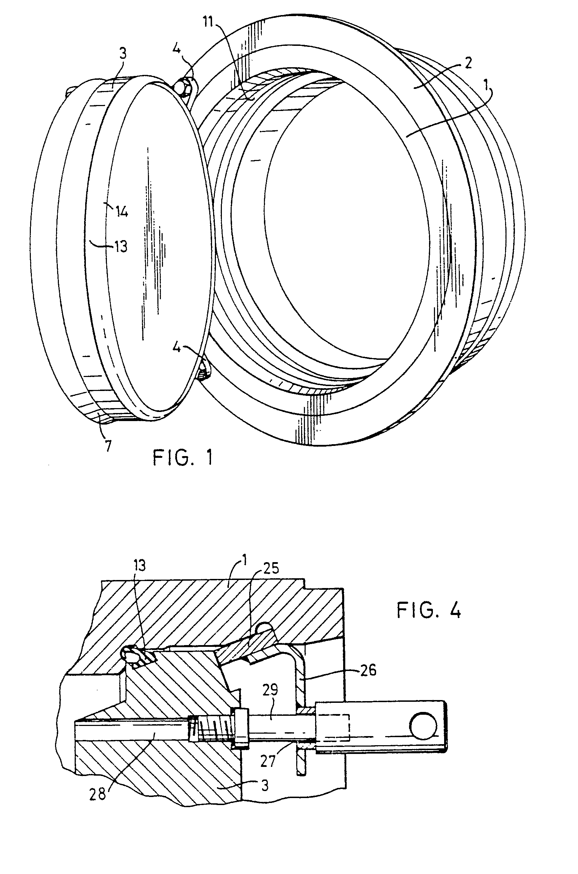

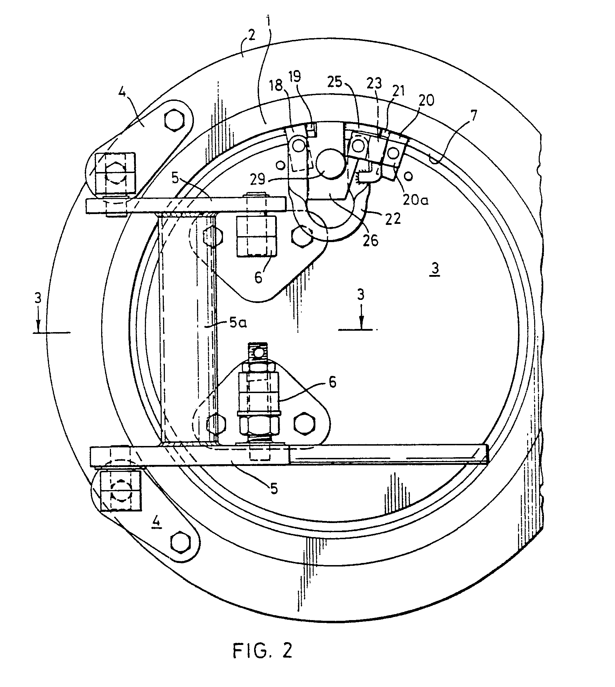

Referring to the drawings, Figures 1 and 2 show a circular access port 1, which is adapted to be welded to the end of a pipe or a pressure vessel, having an annular strengthening collar 2. A door 3 is mounted on bracket 4 attached to the annular collar 2. Pivotally mounted on brackets 4 are secondary brackets 5 the ends of which remote from brackets 4 are pivotally mounted on door supports 6. Brackets 5 are braced by tube 5a. The distance between the pivot axis of the brackets 5 on the brackets 4 and the pivot axis of the brackets on the supports 6 is approximately 50% of the distance between the pivot axis of the brackets 5 on the brackets 4 and a line parallel thereto and passing through the centre of the door 3. This enables the door 3 to be removed from the access port 1 by means firstly of an axial outwards movement followed by a rotational movement. Relatively small doors may be moved manually. Larger doors may be moved by a handwheel-operated gearbox mounted in the tube 5a.

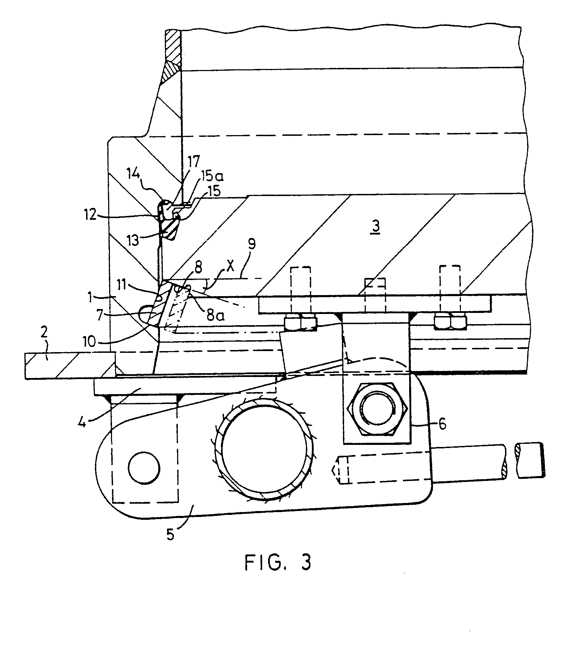

A C-shaped locking member 7 is disposed around the periphery of the door 3. As best seen in Figure 3, the locking member is in the form of a hollow frusto-cone, with a rectangular cross-section. In the example illustrated the cone angle is 20°.

The marginal portion of the external face of the door 3 is in the form of a frusto-conical flat face 8, the angle X between face 8 and the plane of the door (line 9) being 20°. An internal bearing surface 20 formed in the access port 1 slopes at a similar angle to the plane of the door, i.e. faces 8 and 10 are parallel. Bearing face 10 forms one side of a triangular-shaped recess 11 machined out of the inside wall of the access port 1. This triangular recess 11 houses the locking ring 7 when the ring 7 is in fully engaged, locked position.

When the ring 7 is in the contracted, disengaged, position it seats on the conical surface 8a (see Figure 3), normal to surface 8. This provides a "parking" position for the band 7 and ensures its positive retention on the door 3 after unlocking and as the door is opened.

A further recess 12 provided in the internal wall of the access port 1 provides an abutment face for the outer flange 14 of an elastomeric seal 13, which is retained in an annular groove 15a on the door 3.

As the door is closed on the port, the leading corner of the convex curved flange 14 contacts the interior of the concave groove 12 and deflects it towards flange 15, thus ensuring a positive and effective seal. In particular the flange 15 is lipped to engage in a tight configuration with the side of groove 15a, thus preventing the possibility of leakage between seal 13 and door 3. It will be understood that flange 14 is flexible in the axial direction and makes effective contact with groove 12 over a range of axial positions, and that the wedge-shaped body of seal 13 is adapted to carry the higher pressure loads after initial low pressure sealing has been established. In use, the cavity 17 formed between the flanges 14 and 15 is expanded by the pressure of the fluid within the pipe or vessel, thus causing flanges 14 and 15 to seat more tightly against the respective opposed faces of the port 1 and door 3.

The mechanism for operating the locking member is shown in more detail in Figures 2 and 5-7.

A bracket 18 is welded to the end 19 of the locking band 7, and a second bracket 20 is welded to the other end 21 of the locking ring. A horseshoe-shaped spring link 22 is pivotally mounted at one end on bracket 18 and at the other end on an operating link 20a which is itself pivotally mounted on bracket 20. An operating or tommy bar-receiving socket 23 is mounted on operating link 20a. The effective length (between pin centres) of the operating link 20a is half the distance by which the bands ends are to be moved. Turning the operating link about 180° by means of the tommy bar effectively adds or subtracts its effective length, thus causing the necessary total movement, and also desirably achieving over-centre or "toggle" locking of the assembly at both ends of the movement. The horseshoe-shaped spring link 22 provides sufficient flexibility to allow over-centre movement without excessive force or undesirably-exact assembly.

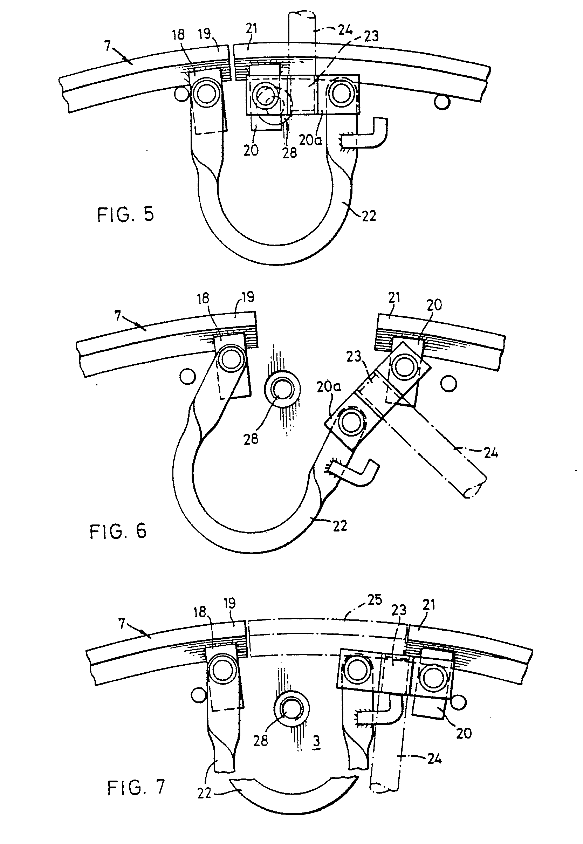

The sequence of operations for expanding the locking member 7 and locking the door 3 to the access port 1 is best seen in Figures 5-7. Figure 5 shows the locking band when the door is in the closed, but unlocked position. A tommy bar 24 is inserted in the socket 23 and rotated clockwise to force the ends 19, 21 of the locking band 7 apart (Figure 6). This causes the band 7 to expand until it assumes the locking position shown in Figure 3 wherein it is tightly locked between sloping bearing surfaces 8 and 10. In this position a locking block 25 is inserted between the spaced ends 19,21 of the locking band 7, to retain the ends of the band in their spaced-apart position and the band in its locking position. As will be seen from Figures 2 and 4, the locking segment 25 is welded to an L-shaped bracket 26 which has at its lower end an aperture 27 which fits over a bleed port 28 mounted in the door 3. The bracket 26 is retained in position by a bolt 29.

Before the door can be unlocked, it is necessary to remove the bolt 29 and thereby bleed any excess pressure from within the pressure vessel or pipe. Following this the bracket 26 and attached locking segment 25 may be removed and the tommy bar 24 re-inserted in socket 23 and rotated counter-clockwise. This will cause the ends 19 and 21 of the locking band 7 to move towards each other, the bend 7 will contract and the door 3 will then be in the unlocked position with the band 7 as shown in Figure 5. The door can then be removed, first axially and then rotationally, from the access port 1.

The closure of the invention has the advantage that it is of simple design and is easy to operate. It can be made in a wide range of sizes, from for example 15-180cm. diameter, yet using only a relatively small range of locking band sizes and profiles. For example, the whole range of door sizes mentioned above may be satisfied by four band cross-sections, i.e. of sizes 6 x 30mms., 10 x 40mms., 15 x 50mms, and 20 x 65mms. The combination of relative slenderness and conical shape makes the locking band both circularly flexible but yet efficiently rigid as a strut.

The locking and unlocking operations are rapid and the safety bleed lock arrangement offers maximum security. The locking band is visible at all times. If desired an additional lightweight hinged sheet metal door may be used for full weather protection. A particularly suitable material for the seal is extruded PVC nitrile, having a hardness of 75° Shore. The main components of the closure are of steel, but for special applications they may be be made in phosphor-bronze, stainless steel or cupro-nickel.

Although the invention has been described with particular reference to pipes and pressure vessels, the invention has application to any aperture which requires a secure but readily releasable closure.

## Claims

1. A closure comprising a door (3) adapted to fit into an aperture (1) in a member to be closed, and an arcuate locking member (7) disposed around the periphery of the door for locking the door to the said member, the ends of the locking member being movable towards and away from each other to cause radial contraction and expansion of the locking member, whereby the locking member or attachments thereto may be brought out of and into locking engagement with the said member, and wherein the arcuate locking member and/or attachments, when in locking engagement with the said member, is or are locked between surfaces of the said member and the door, characterised in that said surfaces (8,10) are at an acute angle relative to the plane of the door, and that a segmental block (25) is provided to fit between the ends of the locking member when the locking member is expanded, said segmental block being attached to a plate (26) adapted, when the segmental block is in position between the ends of the locking member, to overlie a bleed port O (28) in the door.

2. A closure according to claim 1 wherein the member to be closed is a pipe or a pressure vessel.

3. A closure according to claim 1 or 2 wherein the locking member (7) comprises an annular or C-shaped body.

4. A closure according to claim 3 wherein the locking member (7) is in the form of a conical flat band, of rectangular section.

5. A closure according to claim 3 or 5 wherein a number of plates or blocks are attached to the annular or C-shaped body.

6. A closure according to any of claims 1 to 5 wherein the acute angle is in the range 15-25°.

7. A closure accordin any of claims 1 to 6 wherein the segmental block (25) has the same cross-sectional shape as the locking member (7).

8. A closure as claimed in any of claims 1 to 7 wherein a horseshoe-shaped spring link (22) is attached directly to one end of the locking member and by means of an operating link (20A) to the other end of the locking member, and means (24) is provided for rotating the operating link to cause movement of the said ends of the locking member towards and away from each other.

## Patentansprüche

1. Verschluß, bestehend aus einer in eine Öffnung (1) in einem zu verschließenden Element einsetzbaren Tür (3) und einem bogenförmigen Verriegelungselement (7), das längs des Umfanges der Tür angeordnet ist, um die Tür gegenüber dem Element zu verriegeln, wobei die Enden des Verriegelungselementes in Richtung auf und weg voneinander bewegbar sind, um eine radiale Kontraktion und Expansion des Verriegelungselementes zu bewirken, wodurch das Verriegelungselement oder daran befindliche Zusatzeinrichtungen in und aus einer verriegelnden Eingriffnahme mit dem Element gebracht werden kann (können), und wobei das bogenförmige Element und/oder die Zusatzeinrichtungen in der verriegelnden Eingriffnahme mit dem Element zwischen Flächen des Elementes und der Tür verriegelt ist (sind), dadurch gekennzeichnet, daß die Flächen (8,10) unter einem spitzen Winkel gegenüber der Ebene der Tür stehen, und daß ein Segmentblock (25) vorgesehen ist, der zwischen den Enden des Verriegelungselementes paßt, wenn das Verriegelungselement ausgedehnt ist, welcher Segmentblock an einer Platte (26) befestigt ist, die bei in Position zwischen den Enden des Verriegelungselementes befindlichem Segmentblock eine Entlüftungsöffnung (28) in der Tür überdecken kann.

2. Verschluß nach Anspruch 1, dadurch gekennzeichnet, daß das zu verschließende Element ein Rohr oder ein Druckkessel ist.

3. Verschluß nach Anspruch 1 oder 2, dadurch gekennzeichnet, daß das Verriegelungselement (7) ein ring- oder C-förmiges Teil umfaßt.

4. Verschluß nach Anspruch 3, dadurch gekennzeichnet, daß das Verriegelungselement (7) in Gestalt eines konischen Flachbandes mit rechteckigem Querschnitt ausgebildet ist.

5. Verschluß nach Anspruch 3 oder 5, dadurch gekennzeichnet, daß eine Vielzahl von Platten oder Blöcken am ring- oder C-förmigen Teil befestigt ist.

6. Verschluß nach einem der Ansprüche 1 bis 5, dadurch gekennzeichnet, daß der spitze Winkel im Bereich von 15-25° liegt.

7. Verschluß nach einem der Ansprüche 1 bis 6, dadurch gekennzeichnet, daß der Segmentblock (25) die gleiche Querschnittsgestalt wie das Verriegelungselement (7) hat.

8. Verschluß nach einem der Ansprüche 1 bis 7, dadurch gekennzeichnet, daß ein hufeisenförmiges Federglied (22) direkt mit einem Ende des Verriegelungsementes und mittels eines Betätigungsgliedes (20a) mit dem anderen Ende des Verriegelungselementes verbunden ist und eine Einrichtung (24) vorgesehen ist, um das Betätigungsglied zu drehen, wodurch eine Bewegung der Enden des Verriegelungselementes in Richtung auf und weg voneinander hervorgerufen wird.

**Revendications**

1. Un couvercle comprenant une porte ( 3) apte à s'insérer dans une ouverture (1) dans un élément à fermer, et un élément incurvé de verrouillage (7) disposé autour de la périphérie de la porte pour verrouiller la porte sur ledit élément, les extrémités de l'élément de verrouillage étant déplaçables l'une vers l'autre ou en directions opposées pour provoquer une contraction et une expansion radiale de l'élément de verrouillage grâce à quoi l'élément de verrouillage ou ses accessoires peuvent être amenés en contact ou hors de contact de verrouillage avec ledit élément et dans lequel l'élément incurvé de verrouillage et/ou ses accessoires, lorsqu'il est ou qu'ils sont en contact avec ledit élément est ou sont verrouillé(s) entre des surfaces dudit élément de la porte, caractérisé en ce que lesdites surfaces (8, 10) font un angle aigu par rapport au plan de la porte, et qu'un bloc segmentaire (25) est prévu pour s'insérer entre les extrémités de l'élément de verouillage lorsque l'élément de verrouillage est en expansion, ledit bloc segmentaire étant fixé à une plaque (26) adaptée, lorsque le bloc segmentaire est amené en position entre les extrémités de l'élément de verrouillage, pour recouvrir un orifice d'évacuation (28) ménagé dans la porte.

2. Un couvercle selon la revendication 1 dans lequel l'élément à fermer est un tuyau ou un récipient sous pression.

3. Un couvercle selon la revendication 1 ou 2 dans lequel l'élément de verrouillage (7) comprend un corps annulaire ou en forme de C.

4. Un couvercle selon la revendication 3 dans lequel l'élément de verrouillage (7) est en forme d'une bande conique plate, de section rectangulaire.

5. Un couvercle selon les revendications 3 ou 5 dans lequel un certain nombre de plaques ou blocs sont fixés au corps annulaire ou en forme de C.

6. Un couvercle selon l'une quelconque des revendications 1 à 5 dans lequel l'angle aigu se trouve dans la plage 15-25°.

7. Un couvercle selon l'une quelconque des revendications 1 à 6, dans lequel le bloc segmentaire (25) présente la même forme de section transversale que l'élément de verrouillage.

8. Un couvercle selon l'une quelconque des revendications 1 à 7, dans lequel un élément de liaison élastique en forme de fer à cheval (22) est fixé directement à une extrémité de l'élément de verrouillage et au moyen d'un élément de liaison actif (20a) à l'autre extrémité de l'élément de verrouillage et dans lequel un moyen est prévu pour faire tourner l'élément de liaison actif afin de provoquer le mouvement desdites extrémités de l'élément de verrouillage l'une vers l'autre ou en directions opposées.

FIG. 1

FIG. 4

FIG. 2

FIG. 3

FIG. 5

FIG. 6

FIG. 7